# EUROPÄISCHE PATENTSCHRIFT

(11) **EP 0 670 437 B1**
(45) Veröffentlichungstag und Bekanntmachung des Hinweises auf die Patenterteilung: **29.04.1998**
(21) Anmeldenummer: 95101805.0
(22) Anmeldetag: 10.02.1995
(51) Int. Cl.: F16H 15/02

(54) **Fahrbare Kehrvorrichtung**
Mobile sweeper
Balayeuse mobile

(30) Priorität: 04.03.1994 DE 4407323
(43) Veröffentlichungstag der Anmeldung: 06.09.1995
(73) Patentinhaber: Alfred Kärcher GmbH & Co., 71364 Winnenden (DE)
(72) Erfinder: Urban,Uwe, D-71384 Weinstadt (DE); Röck,Dirk, D-74375 Pleidelsheim (DE)
(74) Vertreter: Hoeger, Stellrecht & Partner

(56) Entgegenhaltungen:
- FR-A- 815 870
- US-A- 1 396 954
- US-A- 1 787 571
- DATABASE WPI Week 9101 Derwent Publications Ltd., London, GB; AN 91-001467 & EP-A-0 404 437 (TENNANT)
- DATABASE WPI Week 7609 Derwent Publications Ltd., London, GB; AN 76-c0271x & US-A-3 938 400 (ALLIS)

## Beschreibung

Die Erfindung betrifft eine fahrbare Kehrvorrichtung mit den Merkmalen des Oberbegriffes des Patentanspruches 1. Derartige fahrbare Kehrvorrichtungen gehören zum Stand der Technik.

Es sind weiterhin fahrbare Kehrvorrichtungen bekannt, die beispielsweise im industriellen Bereich zur Reinigung von Fabrikhallen etc. verwendet werden, bei denen die Fahrtrichtung der Kehrvorrichtung durch Umkehr des maschinellen Antriebes, also beispielsweise eines Elektromotors, erreicht wird. Diese Umschaltung ist relativ zeitaufwendig, außerdem ist es dann nicht möglich, mit demselben maschinellen Antrieb andere Aggregate dauerhaft zu betreiben, beispielsweise Saugluftgebläse etc. Bei verschiedenartigen Fahrzeugen wird die Antriebsbewegung durch einen Reibradantrieb auf die Antriebsräder übertragen, wobei zwei durch denselben Antrieb dauerhaft antreibbare Stränge mit gegenläufigem Drehsinn vorhanden sind (FR-A 815 870). Zur Drehrichtungsumkehr wird der eine oder der andere Strang ausgewählt, dazu müssen die Reibräder mittels bekannter Steuermechanismen verschoben und wahlweise mit anderen Rädern in Reibkontakt gebracht werden.

Es ist Aufgabe der Erfindung, bei einer gattungsgemäßen Kehrvorrichtung eine Umkehr der Antriebsrichtung zu ermöglichen, der für die Bedienungsperson die Betätigung der Kehrmaschine deutlich vereinfacht.

Diese Aufgabe wird bei einer fahrbaren Kehrvorrichtung der eingangs beschriebenen Art erfindungsgemäß durch die kennzeichnenden Merkmale des Patentanspruches 1 gelöst.

Bei dieser Konstruktion kann der Antrieb dauerhaft in Betrieb bleiben, und allein durch Wechsel der Reibverbindung kann eine Umkehr der Fahrtrichtung erfolgen. Die Bedienungsperson kann dabei die Kehrvorrichtung in der vom reinen Handbetrieb gewohnten Weise schieben und ziehen, wobei bei dieser Betätigung der Handgriff selbst als Verstellelement wirkt und beim Schieben die Antriebsräder in Vorwärtsrichtung antreibt, beim Ziehen in Rückwärtsrichtung.

Bei einer ersten bevorzugten Ausführungsform ist vorgesehen, daß die beiden Stränge zwei gegenläufig angetriebene Wellen sind, an die ein Reibrad wechselweise andrückbar ist.

Bei einer umgekehrten Ausführungsform ist vorgesehen, daß die beiden Stränge zwei gegenläufig angetriebene Wellen sind, die an ein Reibrad wechselweise andrückbar sind.

Eine besonders günstige Konstruktion ergibt sich, wenn das Reibrad oder die angetriebenen Wellen an einem ersten, an seinem freien Ende verschwenkbar an der Kehrvorrichtung angelenkten Arm eines Kniehebels gelagert sind, dessen zweiter Arm mit dem Verstellelement verbunden ist.

Dabei ist es besonders vorteilhaft, wenn der Schub- und Zuggriff verschwenkbar am Fahrgestell gelagert und gelenkig mit dem zweiten Arm des Kniehebels verbunden ist. Dadurch ergibt sich eine besonders robuste, platzsparende und im Aufbau einfache Konstruktion eines solchen umschaltbaren Reibradantriebes.

Die nachfolgende Beschreibung bevorzugter Ausführungsformen der Erfindung dient im Zusammenhang mit der Zeichnung der näheren Erläuterung. Es zeigen:
- Figur 1 :: eine schematische Teilansicht einer fahrbaren Kehrvorrichtung mit einem über einen Schub- und Zuggriff umschaltbaren Reibradgetriebe und

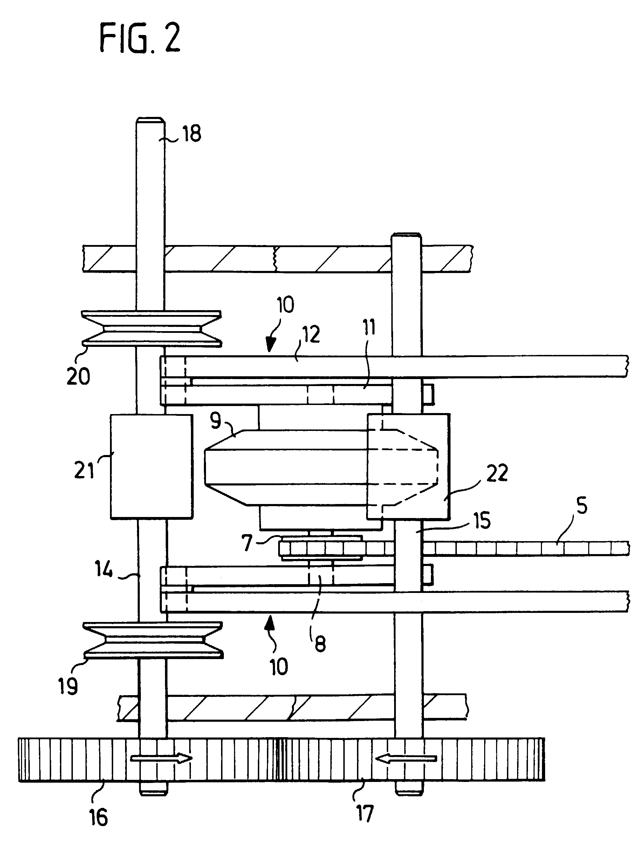

- Figur 2 :: eine Draufsicht auf die wesentlichen Antriebsteile eines Reibradgetriebes mit zwei gegenläufig angetriebenen Antriebswellen.

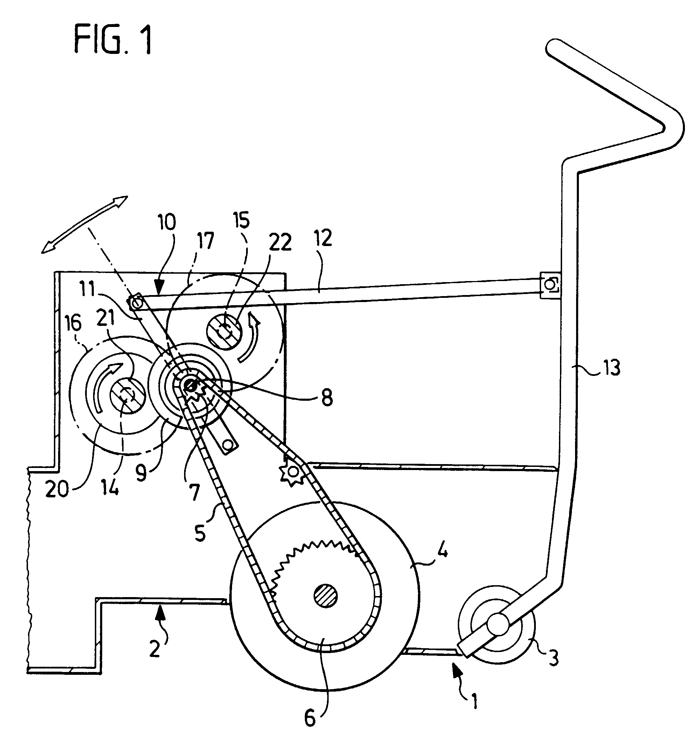

Die in Figur 1 teilweise dargestellte Kehrvorrichtung 1 umfaßt ein Fahrgestell 2 mit einer frei drehbar gelagerten Rolle 3 und einer Antriebswalze 4, die auch durch Antriebsräder ersetzt sein könnte. In der Zeichnung nicht gesondert dargestellt ist eine parallel zur Antriebswalze 4 verlaufende Kehrwalze, die als Bürstenwalze ausgebildet und mit einem eigenen Antrieb versehen sein kann. Eine solche Ausgestaltung ist an sich bekannt und daher hier nicht näher erläutert.

Die Antriebswalze 4 ist um eine horizontale Achse drehbar am Fahrgestell 2 gelagert und wird mittels eines Kettenzuges 5 angetrieben, der über ein koaxial zur Antriebswalze 4 angeordnetes und drehfest mit dieser verbundenes Kettenrad 6 und über ein weiteres Kettenrad 7 geführt ist, das seinerseits drehfest auf einer Welle 8 gelagert ist, welche koaxial zum Kettenrad 7 ein drehfest mit der Welle 8 verbundenes Reibrad 9 trägt.

Zur Lagerung der Welle 8 sind auf dem Fahrgestell 2 zwei gleich ausgebildete und parallel im Abstand zueinander angeordnete Kniehebel 10 mit jeweils einem ersten Arm 11 und einem zweiten Arm 12 angeordnet. Der erste Arm 11 ist mit seinem freien Ende gelenkig am Fahrgestell 2 gelagert, der zweite Arm 12 mit seinem freien Ende gelenkig an einem Schub- und Zuggriff 13, der seinerseits verschwenkbar am Fahrgestell 2 gelagert ist. Die Schwenkachse kann beispielsweise mit der Achse der Rolle 3 identisch sein, wie dies im dargestellten Ausführungsbeispiel der Fall ist.

Die Welle 8 ist dabei mit ihren beiden Enden am ersten Arm 11 gehalten, so daß die Position der Welle 8 beim Verschwenken des Schub- und Zuggriff 13 verändert wird.

Fahrgestellfest sind im Bereich des Reibrades 9 zwei parallel zueinander verlaufende Reibwellen 14, 15 gelagert, die über zwei gleich große Zahnräder 16 und 17 miteinander kämmen, so daß sie gegensinnig umlaufen. Die eine Reibwelle 14 ist über eine Verlängerung 18 mit einem in der Zeichnung nicht dargestellten Antrieb verbunden, beispielsweise einem Elektromotor, außerdem nimmt die erste Reibwelle 14 zwei Riemenscheiben 19 und 20 auf, über die andere Aggregate der Kehrvorrichtung angetrieben werden, beispielsweise die Kehrwalze und eine Absaugung.

Beide Reibwellen 14 und 15 weisen in ihrem mittleren Bereich drehfest auf den Reibwellen 14 und 15 gehaltene Reibzylinder 21 und 22 auf, an welche das Reibrad 9 durch entsprechende Verschwenkung des Schub- und Zuggriffes 13 wahlweise anlegbar ist. Dadurch wird eine Reibverbindung erzeugt, so daß die Antriebsenergie von den Reibwellen über das Reibrad und den Kettenzug 5 auf die Antriebswalze 4 übertragen wird. Da die beiden Reibwellen 14 und 15 gegensinnig umlaufen und da das Reibrad immer nur entweder an der Reibwelle 14 oder an der Reibwelle 15 anliegt, kann durch Wechsel der Anlage die Fahrtrichtung verändert werden. Diese Fahrtrichtung wird so gewählt, daß die Richtung der Verschwenkung des Schub- und Zuggriffes mit der Fahrtrichtung übereinstimmt. Dadurch kann die Bedienungsperson die Fahrtrichtung in derselben Art wählen, wie dies beim reinen Handbetrieb der Fall wäre. Beim Schieben des Gerätes wird das Gerät in Richtung der Schubkraft angetrieben, beim Ziehen des Gerätes in Richtung der Zugkraft.

Die Umschaltung erfolgt mit sehr kleinen Schaltwegen und kann daher sehr schnell erfolgen. Die Verwendung eines Reibradantriebes ermöglicht einen Schlupf zwischen den Antriebsgliedern, so daß beim Umschalten der Fahrtrichtung keine übermäßige Beanspruchung des Fahrgerätes erfolgt, dieses wird zunächst aus der bisherigen Fahrtrichtung abgebremst und dann sanft in die neue Fahrtrichtung beschleunigt. Damit wird ein erhöhter Verschleiß der Getriebeelemente vermieden, außerdem wird die Bedienung erheblich vereinfacht, da das Verhalten der Kehrvorrichtung sich nicht plötzlich ändert, sondern fließend.

## Patentansprüche

1. Fahrbare Kehrvorrichtung mit einem maschinellen Fahrantrieb, bei dem die Antriebsbewegung über ein Reibradgetriebe auf mindestens ein Antriebsrad übertragen wird,
dadurch gekennzeichnet, daß das Reibradgetriebe zwei durch denselben Antrieb dauerhaft antreibbare Stränge (14, 9; 15, 9) mit gegenläufigem Drehsinn aufweist und daß die Reibradverbindung wahlweise mit dem einen oder dem anderen Strang herstellbar ist, daß der Wechsel der Reibradverbindung durch ein handbetätigbares Verstellelement (13) mechanisch erfolgt, daß das handbetätigte Verstellelement (13) ein Schub- und Zuggriff an der Kehrvorrichtung ist und daß die gewählte Fahrtrichtung gleich der Richtung der auf den Schub- und Zuggriff ausgeübten Schub- oder Zugkräfte ist.

2. Kehrvorrichtung nach Anspruch 1, dadurch gekennzeichnet, daß die beiden Stränge zwei gegenläufig angetriebene Wellen (14, 15) umfassen, an die ein Reibrad (9) welchselweise andrückbar ist.

3. Kehrvorrichtung nach einem der Ansprüche 1 oder 2, dadurch gekennzeichnet, daß die beiden Stränge zwei gegenläufig angetriebene Wellen (14, 15) umfassen, die an ein Reibrad (9) wechselweise andrückbar sind.

4. Kehrvorrichtung nach einem der Ansprüche 2 oder 3, dadurch gekennzeichnet, daß das Reibrad (9) oder die angetriebenen Wellen (14, 15) an einem ersten, an seinem freien Ende verschwenkbar an der Kehrvorrichtung angelenkten Arm (11) eines Kniehebels (10) gelagert sind, dessen zweiter Arm (12) mit dem Verstellelement (13) verbunden ist.

5. Kehrvorrichtung nach Anspruch 4, dadurch gekennzeichnet, daß das Verstellelement (13) in Form des Schub- und Zuggriffes verschwenkbar am Fahrgestell (2) gelagert und gelenkig mit dem zweiten Arm (12) des Kniehebels (10) verbunden ist.

6. Kehrvorrichtung nach einem der Ansprüche 2 bis 5, dadurch gekennzeichnet, daß eine von einem motorischen Antrieb angetriebene Reibwelle (14, 15) zusätzliche Abtriebe (19, 20) für andere Aggregate aufweist und daß diese Reibwelle (14) über ein Getriebe (16, 17) die andere Reibwelle (15) antreibt.

## Claims

1. A mobile sweeper with a mechanical drive, wherein the drive movement is transmitted to at least one drive wheel via a friction gear, characterised in that the friction gear has two drive paths (14, 9; 15, 9) continuously drivable by the same drive and rotating in opposite directions, in that the friction connection can be produced with either one of the drive paths, in that the friction connection is changed mechanically by means of a hand-operated shifting member (13), in that the hand-operated shifting member (13) is a push-pull handle on the sweeper, and in that the selected direction of travel corresponds to the direction of the pushing or pulling forces exerted on the push-pull handle.

2. A sweeper according to claim 1, characterised in that the two drive paths comprise two shafts (14, 15) driven in opposite directions, a friction wheel (9) being pressable against the two shafts (14, 15) in turn.

3. A sweeper according to either one of claims 1 and 2, characterised in that the two drive paths comprise two shafts (14, 15) driven in opposite directions and pressable in turn against a friction wheel (9).

4. A sweeper according to either one of claims 2 and 3, characterised in that the friction wheel (9) or the driven shafts (14, 15) are mounted on a first arm (11) of an elbow lever (10), the free end of the first arm (11) being pivotably articulated on the sweeper and its second arm (12) being connected to the shifting member (13).

5. A sweeper according to claim 4, characterised in that the shifting member (13) in the form of the push-pull handle is pivotably mounted on the chassis (2) and is connected to the second arm (12) of the elbow lever (10) in an articulated manner.

6. A sweeper according to any one of claims 2 to 5, characterised in that a friction shaft (14, 15), driven by a motor, has additional outputs (19, 20) for other assemblies, and in that this friction shaft (14) drives the other friction shaft (15) via a transmission (16, 17).

## Revendications

1. Dispositif mobile réversible comprenant un entraînement de marche mécanique, dans lequel le mouvement d'entraînement est transmis à au moins une roue motrice par l'intermédiaire d'une transmission à roues de friction,
caractérisé en ce que la transmission à roues de friction comprend deux branches (14, 9 ; 15, 9) ayant des sens de rotation inverses et entraînées en permanence par le même entraînement ; et en ce que la liaison par roues à friction peut être établie au moyen de l'une ou l'autre des branches, en ce que le changement de la liaison par roues à friction s'effectue mécaniquement au moyen d'un organe de commande (13) actionné à la main, en ce que l'organe de commande (13) actionné à la main est une manette de poussée et de traction prévue sur le dispositif réversible, et en ce que le sens de marche choisi est le même que le sens des forces de poussée ou de traction exercées sur la manette de poussée et de traction.

2. Dispositif réversible selon la revendication 1, caractérisé en ce que les deux branches comprennent deux arbres (14, 15) entraînés l'un en sens inverse de l'autre, contre lesquels une roue de friction (9) peut être pressée tour à tour.

3. Dispositif réversible selon une des revendications 1 et 2, caractérisé en ce que les deux branches comprennent deux arbres (14, 15) entraînés l'un en sens inverse de l'autre, qui peuvent être pressés alternativement contre une roue de friction (9).

4. Dispositif réversible selon une des revendications 2 et 3, caractérisé en ce que la roue de friction (9) ou les arbres entraînés (14, 15) tourillonne(nt) sur un premier bras (11) d'un levier de genouillère (10) qui est articulé sur le dispositif réversible à son extrémité libre pour pouvoir osciller, et dont le deuxième bras (12) est relié à l'organe de commande (13).

5. Dispositif réversible selon la revendication 4, caractérisé en ce que l'organe de commande (13), constitué par une manette de poussée et de traction, est monté oscillant sur le châssis (2) et est relié de façon articulée au deuxième bras (12) du levier de genouillère (10).

6. Dispositif réversible selon une des revendications 2 à 5, caractérisé en ce qu'un arbre de friction (14, 15) entraîné par un entraînement à moteur possède des sorties supplémentaires (19, 20) pour d'autres appareils et en ce que cet arbre de friction (14) entraîne l'autre arbre de friction (15) par l'intermédiaire d'une transmission (16, 17).
